# EUROPÄISCHE PATENTSCHRIFT

(11) **EP 0 589 202 B1**
(45) Veröffentlichungstag und Bekanntmachung des Hinweises auf die Patenterteilung: **11.03.1998**
(21) Anmeldenummer: 93113098.3
(22) Anmeldetag: 16.08.1993
(51) Int. Cl.: B05B 5/10, H02M 7/10, H02M 3/28

(54) **Elektrostatische Pulverbeschichtungspistole und Verfahren zum Erzeugen einer Hochspannung**
Pistol for electrostatic powder coating and method for generating a high voltage
Pistole pour le revêtement électrostatique par poudre et méthode de génération d'une haute tension

(30) Priorität: 24.09.1992 DE 4232026
(43) Veröffentlichungstag der Anmeldung: 30.03.1994
(73) Patentinhaber: WAGNER INTERNATIONAL AG, 9450 Altstätten (CH)
(72) Erfinder: Seitz, Kurt, CH-9443 Widnau (CH)
(74) Vertreter: Liesegang, Roland, Dr.-Ing.

(56) Entgegenhaltungen:
- EP-A- 0 160 179
- WO-A-90/07381
- DE-A- 2 613 397
- DE-A- 3 215 644
- FR-A- 2 618 618
- US-A- 3 872 370

## Beschreibung

Die Erfindung betrifft ein Verfahren zum Erzeugen einer Hochspannung in einer elektrostatischen Pulverbeschichtungspistole nach dem Oberbegriff von Patentanspruch 1 und eine entsprechende elektrostatische Pulverbeschichtungspistole. Ein Verfahren der eingans genannten Art ist z. B. in der WO-A-90/07381 beschriebern, aus der grundsätzlich bekannt ist, die Frequenz der Versorgungsspannung auf die Resonanzfrequenz des Transformators zu regeln. Ein ähnliche Regeleinrichtung ist Gegenstand der FR-A-2 618 618.

Bekannte Pulverbeschichtungsgeräte haben im allgemeinen einen Hochspannungserzeuger, der einen Transformator und eine dem Transformator nachgeschaltete Hochspannungskaskade aufweist. Die Ausgangsspannung des Transformators wird dem Niederspannungseingang der Hochspannungskaskade und die Ausgangsspannung der Hochspannungskaskade einer Beschichtungs-Hochspannungselektrode zugeführt. Die Primärspule des Transformators wird bei Betrieb des Beschichtungsgerätes durch eine mit einer Arbeitsfrequenz betriebenen Versorgungs-Wechselspannung gespeist. Hierfür ist bei solchen bekannten Beschichtungspistolen normalerweise ein Netzgerät vorgesehen, das eine Versorgungs-Wechselspannung mit einer auf die Komponenten des Hochspannungserzeugers abgestimmten Arbeitsfrequenz ausgibt, wobei der Hochspannungs-Transformator den frequenzbestimmenden Teil dieses sogenannten "Selbstschwinger-Oszillators" bildet. Der Betrieb des Hochspannungserzeugers ist abhängig von seinen einzelnen Komponenten, wie Transformator, Hochspannungskaskade etc, sowie induktiven und kapazitiven Einflüssen, die beispielsweise durch Länge, Querschnitt und Art der Leitungskabel oder durch äußere Störungen entstehen.

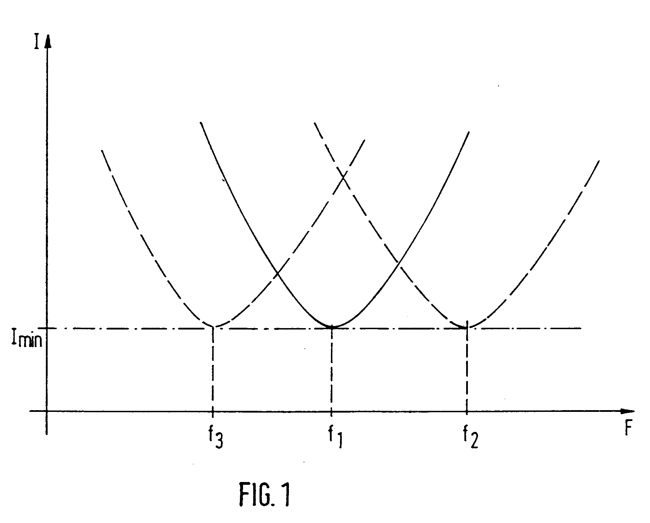

Die beschriebenen, aus dem Stand der Technik bekannten Oszillatoren müssen sich beim Einschalten des Beschichtungsgerätes auf die Arbeitsfrequenz einschwingen und sollen bei Betrieb diese Arbeitsfrequenz möglichst einhalten. Die Arbeitsfrequenz des Hochspannungserzeuger bestimmt maßgeblich den Primärspulenstrom des Transformators. Dabei soll der Hochspannungserzeuger möglichst bei einer solchen Frequenz betrieben werden, bei der Primärspulenstrom minimal und dadurch der Wirkungsgrad des Hochspannungserzeugers maximal ist. Dieses Primärspulenstromminimum ist beispielsweise bei den häufig bei solchen Hochspannungserzeugern eingesetzten Kammerspulen sehr ausgeprägt. Fig. 1 zeigt zur Erläuterung dieser Zusammenhänge ein Diagramm des Primärspulenstromes I abhängig von der Frequenz F der Versorgungsspannung, wobei drei Arbeitspunkte f₁, f₂ und f₃ dargestellt sind. Die verschiedenen Arbeitspunkte, bei denen das Primärspulenminimum Iₘᵢₙ liegt, hängen im wesentlichen.von der Systemauslegung ab. Wenn bei einem Hochspannungserzeuger die Frequenz der Versorgungsspannung aufgrund der Systembelastung oder äußerer Störeinflüsse vom Arbeitspunkt in positiver oder negativer Richtung abweicht, steigt der Primärspulenstrom an.

Bei den bekannten Systemen treten dabei regelmäßig verschiedene Schwierigkeiten auf. Zwar kann der Hochspannungserzeuger mit einem festen Netzgerät, festen Kabellängen und gegebenem Transformator und Hochspannungskaskade für eine vorgegebene, konstante Belastung ausgelegt werden, d.h. für eine Arbeitspunkt, bei dem die Arbeitsfrequenz, der Primärspulenstrom und die Hochspannung konstant bleiben, wenn sich jedoch die Dämpfung des so gebildeten Schwingkkreises durch unterschiedliche Belastungsströme ändert, kann dieses System den veränderten Bedingungen nicht entsprechend angepaßt werden. Dies führt zu einer veränderten Stromaufnahme des Hochspannungserzeugers und hat zur Folge, daß die gewünschte Ausgangsspannung nicht aufrechterhalten werden kann und der Wirkungsgrad deutlich fällt. Sehr hohe Belastungen können bis zu einem kurzzeitigen, vollständigen Zusammenbruch der Ausgangs-Hochspannung führen. Ferner beeinflussen die Toleranzen der Wechsel- und Gleichstromverstärkungsfaktoren von Oszillator-Transistoren und Zuführungs-Kabeln das Verhalten des gesamten Schwingkreis. Zudem hat sich in der Praxis gezeigt, daß solche Oszillatoren bei größeren Kabellängen sehr viel Leistung verlieren oder nicht mehr anschwingen.

Der Erfindung liegt daher die Aufgabe zugrunde, eine Pulverbeschichtungspistole mit Hochspannungserzeuger und ein Verfahren zum Erzeugen einer Hochspannung in einer Pulverbeschichtungspistole zu schaffen, mit denen ein möglchst konstanter Schwingkreis für die Hochspannung erzielt wird. Dabei soll der Hochspannungserzeuger unabhängig von Belastungen, Störungen und Schwankungen der induktiven und kapazitiven Größen des Systems selbst eine konstante, maximale Hochspannung liefern.

Diese Aufgabe wird erfindungsgemäß durch ein Verfahren nach Anspruch 1 und eine elektrostatische Pulverbeschichtungspistole nach Anspruch 7 gelöst.

Der Hochspannungserzeuger und das Verfahren zur Hochspannungserzeugung nach der Erfindung bilden ein sogenanntes "selbstoptimierendes aktives Resonanzsystem". Der Hochspannungserzeuger wird mit einer Wechselspannung betrieben, deren Frequenz kontinuierlich über eine begrenzten Bereich vergrößert und verkleinert (gewobbelt) wird. Der Primärspulenstrom wird kontinuierlich gemessen und dabei wird das Ansteigen oder Abfallen des Primärspulenstromes erfaßt. Sinkt der Strom, so wird die Wobbel-Richtung beibehalten, steigt der Strom so wird die Wobbel-Richtung geändert. Auf diese Weise erhält man eine indirekte Anpassung der Arbeitsfrequenz an die Spuleneigenschaften.

Der Schwingkreis und damit die vom Hochspannungserzeuger abgegebene Spannung ist weitgehend unabhängig von den Systemkomponenten, wie dem Transformator und den Zuführungskabeln, da der Transformator nicht mehr selbst ein frequenzbesimmender Teil des Schwingkreises ist. Beim erfindungsgemäßen Hochspannungserzeuger wird vielmehr mit Hilfe des Primärspulenstrom die optimale Arbeitsfrequenz ermittelt, und durch Wobbeln der Frequenz der Versorgungsspannung und Verschieben des Wobbel-Bereiches abhängig vom Primärspulenstrom, und damit abhängig von der momentanen Belastung, wird diese Frequenz so nachgeführt, daß der Hochspannungserzeuger im wesentlichen immer im Bereich des Primärspulenstromminimums betrieben wird.

Mit dem Hochspannungserzeuger nach der Erfindung treten ferner keine Anschwingprobleme aufgrund unterschiedlicher Spulendämpfungswerte auf. Auch sind die Toleranzen dieses Hochspannungserzeugers bezüglich Leerlaufspannung, Kurzschlußstrom und UI-Kennlinie sehr gering.

Weitere vorteilhafte Ausgestaltungen der Erfindung ergeben sich aus den Unteransprüchen.

Die Erfindung ist im folgenden anhand eines Ausführungsbeispiels mit Bezug auf die Zeichnung näher erläutert. Es zeigen:
- Fig. 1: ein Diagramm des Primärspulenstroms abhängig von der Frequenz der Versorgungsspannung,
- Fig. 2: einen Schaltplan gemäß einer Ausführungsform der Erfindung und
- Fig. 3: den zeitlichen Verlauf von Signalen der Schlatung von Fig. 3.

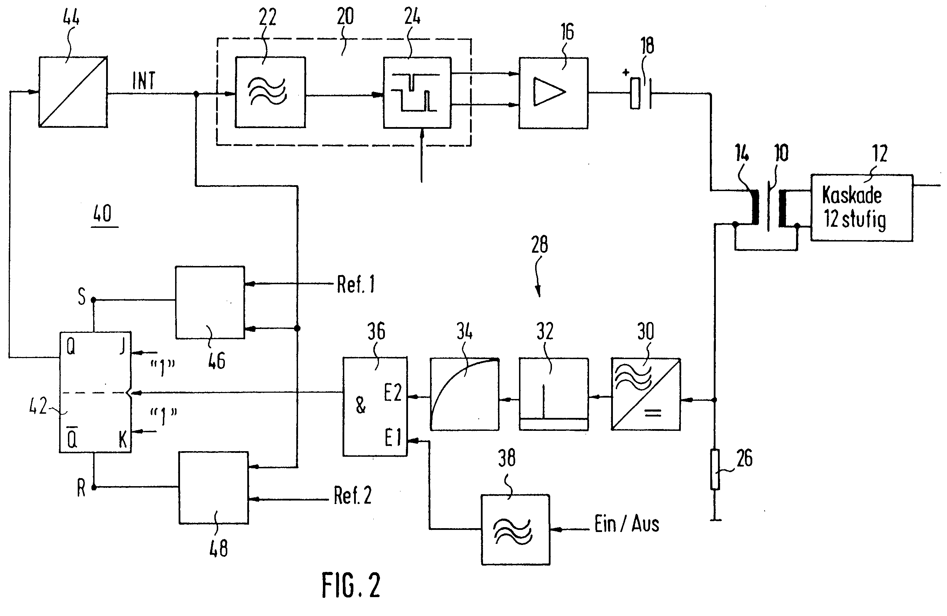

In Fig. 2 ist ein Hochspannungserzeuger mit einem Transformator 10 und einer dem Transformator nachgeschalteten Hochspannungskaskade 12 gezeigt. Die Primärspule 14 des Transformators 10 wird über einen als End-Schaltstufe betriebenen Gegentaktverstärker 16 und mit einem diesem nachgeschalteten Ausgangskondensator 18, beispielsweise einem Elektrolytkondensator, angesteuert. Dem Gegentaktverstärker 16 ist ein Wobbelgenerator 20 vorgeschaltet, der einen spannungsgesteuerten Oszillator (VCO) 22 und ein Totzeit-Steuerglied 24 aufweist.

Die Primärspule 14 des Transformators 10 ist über einen Strommeßwiderstand 26 geerdet. Die dem Strom proportionale Spannung am Strommeßwiderstand 26 wird einer Strommeßschaltung 28 zugeführt, in der ein Spitzenwertgleichrichter 30, ein Differenzierer 32 und ein Verzögerungsglied erster Ordnung (PT-1) 34 in Reihe geschaltet sind. Das Ausgangssignal dieser Strommeßschaltung 28 liegt an einem Eingang E2 eines UND-Gatters 36. Der andere Eingang E1 des UND-Gatters 36 ist mit einem Oszillator 38 verbunden, der eine Rechteck-Schwingung ausgeben kann. Das Ausgangssignal des UND-Gatters 36 wird an eine Steuereinrichtung 40 zur Steuerung des Wobbel-Generator 20 übergeben.

Die Steuereinrichtung 40 weist ein taktflankengesteuertes JK-Speicherglied oder JK-Flip-Flop 42 auf, dessen nicht invertierter Ausgang über einen Integrator 44 mit dem Eingang des Wobbel-Generators 20 verbunden ist, wobei der Ausgang INT des Integrators 44 über zwei parallele Komperatoren 46 bzw. 48 zum SetzEingang S bzw. zum Rücksetz-Eingang R des JK-Flip-Flops 42 zurückgeführt ist. Der Takt-Eingang des JK-Flip-Flops 42 ist mit dem Ausgang des UND-Gatters 36 verbunden. Am J-Eingang und am K-Eingang des JK-Flip-Flops 42 liegt ständig eine logische "1" an, so daß das JK-Flip-Flop wie ein T-Flip-Flop arbeitet; d.h., bei jeder steigenden Flanke am Takt-Eingang des Flip-Flops ändert dessen Ausgangssignal Q die Polarität, so daß sich ein Ausgangssignal Q mit der halben Eingangsfrequenz ergibt. An den jeweils zweiten Eingängen der Komperatoren 46 bzw. 48 liegen Bezugssignale Ref.1 bzw. Ref.2 an.

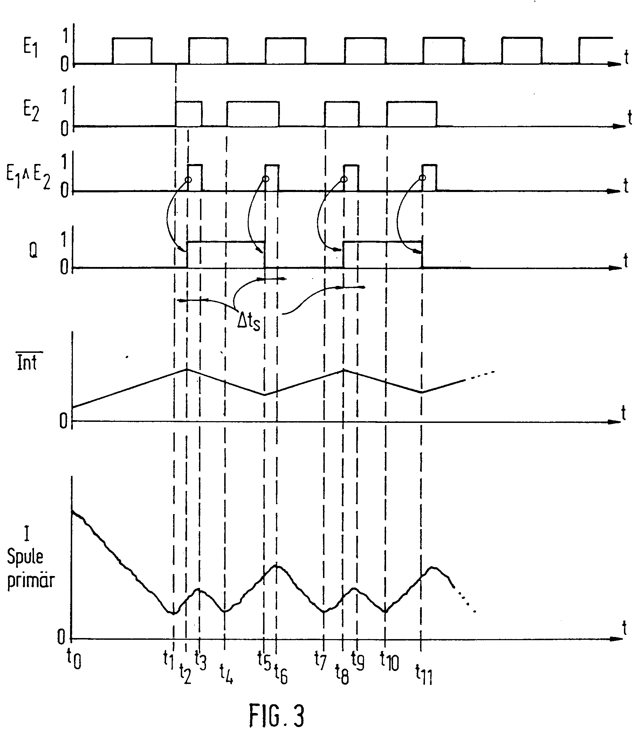

Der Betrieb der gezeigten Schaltung ist im folgenden mit Bezug auf Fig. 3 beschrieben. Während des Betriebs des Hochspannungserzeugers wird von der Strommeßschaltung 28 fortlaufend die dem Primärspulenstrom proportionale Spannung am Strommeßwiderstand 26 aufgenommen. Diese Spannung wird vom Gleichrichter 30 gleichgerichtet, im Differenzierer 32 differenziert und von dem nachfolgenden PT1-Glied 34 geglättet. Am Ausgang (E2) des PT1-Gliedes wird dadurch bei steigendem Primärspulenstrom ein logisches "1"-Signal und bei fallendem Primärspulenstrom ein logisches 0"-Signal gebildet. Die Strommeßschaltung erfaßt demnach Anderungen des Primärspulenstroms und setzt diese in logische Signale ("1": steigend; "0": fallend) um. Sie ist daher auch als Komparator 28 bezeichnet. Das Ausgangssignal E2 der Strommeßschaltung wird vom UND-Gatter 36 mit dem Ausgangssignal E1 (Eingangstakt) des Oszillators 38 verknüpft.

Zum Zeitpunkt t₀ ist die momentane Arbeitsfrequenz des Oszillators relativ weit vom Optimum entfernt, d.h., der Primärspulenstrom I ist deutlich größer als Iₘᵢₙ. Die Wobbelrichtung (Frequenzänderung) geht während des Zeitintervalls t₀ → t₁ in Richtung des Optimums, und der Primärspulenstrom I nimmt ab (E₂ = 0). Zum Zeitpunkt t₁ erreicht der Spulenstrom kurzzeitig das Spulenstrommimimum, und im nachfolgenden Intervall t₁ → t₃ steigt der Spulenstrom wieder an, und der Komparatorausgang E2 geht auf "1". Durch die UND-Verknüpfung von E1 (Eingangstakt) und E2 ändert sich die Polarität des JK-Flip-Flop-Ausgangs Q erst mit der nächsten steigenden Flanke von E1, und erst zum Zeitpunkt t₂ wird die Wobbelrichtung umgeschaltet. Mit der Polaritätsänderung von Q ändert auch der Integrator 44 seine Integrationsrichtung, woraus sich, wie noch genauer beschrieben ist, die Anderung der Wobbelrichtung ergibt.

Das Zeitintervall t₂ → t₃ beinhaltet insbesondere die Verzögerung durch das PT1-Glied und die weiteren Verzögerungen durch das Gesamtsystem. Die Gesamtverzögerungszeit ist mit Δtₛ bezeichnet. Der Primärspulenstrom I fällt daher erst zum Zeitpunkt t₃ wieder ab, erreicht zum Zeitpunkt t₄ wiederum das Spulenstromminimum, und der oben beschriebene Ablauf wiederholt sich.

Zur deutlicheren Darstellung der zeitlichen Abläufe beim Betrieb der erfindungsgemäßen Schaltung ist der Primärspulenstrom zeitlich stark gedehnt wiedergegeben. In der Praxis ist die Systemverzögerungszeit sehr viel kleiner als die Periodendauer des Taktgenerators 38, d.h. Δtₛ << T.

Da der Taktoszillator E1 und das Komparatorsignal E2 nicht synchron sind, ist die Reaktionszeit vom Erkennen des Spulenstromanstiegs zum Umschalten der Wobbelrichtung nicht konstant und kann maximal eine halbe Periodendauer T/2 des Taktgenerators 38 betragen (t₁ → t₂ oder t₄ → t₅).

Durch die Verknüpfung des Ausgangssignals E2 des Komparators oder der Strommeßschaltung mit einem Taktsignal erhält man einen Zeitraum, in dem keine Umschaltung der Wobbelrichtung erfolgen kann. Dadurch kann das Steigen und Sinken des Primärspulenstroms besser und zuverlässiger detektiert werden. Zudem erhält man dadurch keine unkontrollierten Zustände.

Die Ausgangsspannung INT des Integrators 44 dient zur Ansteuerung des spannungsgesteuerten Oszillators 22. Dieser ist beim gezeigten Ausführungsbeispiel ein VCO, der eine Rechteck-Versorgungsspannung mit abhängig von der Amplitude der Integrator-Ausgangsspannung modulierter Impulslänge für den Transformator 10 des Hochspannungserzeugers liefert. Die rampenförmig ansteigende und abfallende Integrator-Ausgangsspannung INT bewirkt dabei in der Praxis eine Modulation der Oszillator-Ausgangsfrequenz von etwa +/- 90 Hz bei einer Arbeitsfrequenz von etwa 19 -30 kHz. Das dem Oszillator 22 nachgeschaltete Totzeit-Steuerglied 24 verzögert das Ausgangssignal des Oszillators 22, so daß eine fehlerfreie Ansteuerung der Endstufentransistoren der Gegentakt-Endstufe 16 sichergestellt ist.

Wenn nun aufgrund einer Störung oder eines Fehlers im Resonanzkreis die Ausgangsspannung des Integrators einen ersten Bezugswert Ref.1 unterschreitet oder einen zweiten Bezugswert Ref.2 überschreitet wird dies von den Komparatoren 46 bzw. 48 erkannt, und das JK-Flip-Flop wird auf einen definierten Anfangszustand aufgesetzt bzw. zurückgesetzt. Die Signale SET und RESET haben also höhere Priorität und zwingen die Wobbelrichtung in die korrekte Richtung. Dadurch wird erreicht, daß die Ausgangsspannung des spannungsgesteuerten Oszillators innerhalb eines bestimmten vorgegebenen Frequenzbereiches, beispielsweise zwischen 10 kHz und 90 kHz, bleibt. Dies ist notwendig, weil sich der Schwingkreis sonst bei außerhalb dieses Bereichs liegenden Resonanzfrequenzen des nachgeschalteten Hochspannungserzeugers (der vereinfacht als PT2-Glied beschrieben werden kann) unkontrolliert aufschwingen könnte.

Der Eingangsoszillator 38 gewährleistet ferner beim Einschalten des Systems, daß das Ausgangssignal INT des Integrators 44 sich ungefähr im mittleren Arbeitsbereiches einstellt. Im allgemeinen liegt die Arbeitsfrequenz der Hochspannungserzeuger in einem Bereich von 15 bis 30 kHz, vorzugsweise bei 19 bis 27 kHz. Diese Arbeitsfrequenz wird mit einer Modulations- oder Wobbelfrequenz einer Größenordnung von 100 Hz um etwa +/- 90 Hz um dem Arbeitspunkt herum verändert.

## Patentansprüche

1. Verfahren zum Erzeugen einer frequenzarmen Hochspannung in einer elektrostatischen Pulverbeschichtungspistole mit einem Hochspannungserzeuger, der einen Transformator und eine dem Transformator (10) nachgeschaltete Hochspannungskaskade (12) aufweist, bei dem die Ausgangsspannung des Transformators (10) dem Niederspannungseingang der Hochspannungskaskade (12) und die Ausgangsspannung der Hochspannungskaskade einer Beschichtungs-Hochspannungselektrode zugeführt werden, die Primärspule (14) des Transformators durch eine mit einer Arbeitsfrequenz betriebene Versorgungs-Wechselspannung gespeist wird und während des Betriebs der Beschichtungspistole die Frequenz der Versorgungsspannung um die Arbeitsfrequenz herum verändert wird, dadurch **gekennzeichnet,** daß
- die Frequenz der Versorgungsspannung fortlaufend, kontinuierlich verändert (gewobbelt) wird,
- ebenfalls fortlaufend die Änderung der Stromstärke des Primärspulenstroms (I) des Transformators (10) ermittelt wird, und
- jeweils dann, wenn ein Anstieg der Stromstärke des Primärspulenstorms (I) festgestellt wird, die Richtung der Frequenzänderung (Wobbel-Richtung) umgekehrt wird.

2. Verfahren nach Anspruch 1, dadurch **gekennzeichnet,** daß die Frequenz der Versorgungsspannung innerhalb eines vorgegebenen, begrenzten Bereiches verändert wird.

3. Verfahren nach Anspruch 1 oder 2, dadurch **gekennzeichnet,** daß eine Frequenz der Versorgungsspannung im Bereich von 15 bis 30 kHz, vorzugsweise 19 bis 27 kHz gewählt wird .

4. Verfahren nach einem der vorangehenden Ansprüche, daurch **gekennzeichnet,** daß die Versorgungsspannung eine Rechteckspannung ist.

5. Verfahren nach einem der vorangehenden Ansprüche, dadurch **gekennzeichnet,** daß die Frequenz der Versorgungsspannung beim Wobbeln um etwa ± 50 bis ± 150 Hz verändert wird.

6. Verfahren nach einem der vorangehenden Ansprüche, dadurch **gekennzeichnet,** daß die Frequenz der Versorgungsspannung mit einer Wobbel-Frequenz von 50 bis 150 Hz verändert wird.

7. Elektrostatische Pulverbeschichtungspistole mit einem Hochspannungserzeuger, der einen Transformator (10) und eine dem Transformator nachgeschaltete Hochspannungskaskade (12) aufweist, bei dem die Ausgangsspannung des Transformators (10) dem Niederspannungseingang der Hochspannungskaskade (12) und die Ausgangsspannung der Hochspannungskaskade einer Beschichtungs-Hochspannungselektrode zugeführt ist und die Primärspule (14) des Transformators durch eine mit einer Arbeitsfrequenz betriebene Versorgungs-Wechselspannung gespeist ist, mit
- einer Strommeßschaltung (28) zum fortlaufenden Erfassen der Stromstärkenänderung des Primärspulenstroms (I) des Transformators,
- einem Wobbel-Generator (20) zum fortlaufend kontinuierlichen Verändern der Frequenz der Versorgungsspannung um die Arbeitsfrequenz herum (Wobbeln) während des Betriebs der Beschichtunspistole und
- einer Steuereinrichtung (36, 38, 40) zum Steuern des Betriebs des Wobbel-Generators, wobei
- die Steuereinrichtung jeweils dann, wenn ein Anstieg der Stromstärke des Primärspulenstroms feststellbar ist, die Richtung der Fequenzänderung (Wobbel-Richtung) umkehrt.

8. Elektrostatische Pulverbeschichtungspistole nach Anspruch 7 , dadurch **gekennzeichnet,** daß die Strommeßschaltung einen mit der Primärspule (14) des Transformators (10) verbundenen Strommeßwiderstand (26), einen Spitzenwertgleichrichter (30), einen Differenzierer (32) und ein Verzögerungsglied (34) aufweist.

9. Elektrostatische Pulverbeschichtungspistole nach einem der Ansprüche 7 bis 8, dadurch **gekennzeichnet,** daß die Steuereinrichtung (40) ein UND-Glied (36), ein JK-Speicherglied (42) und einen Integrator (44) aufweist, wobei ein Eingang (E2) des UND-Gliedes mit dem Ausgang der Strommeßschaltung, ein anderer Eingang (E1) mit einem Taktgeber (38) und der Ausgang des UND-Gliedes mit dem Takt-Eingang des Speichergliedes (42) verbunden sind, ein Ausgang des JK-Speichergliedes (42) dem Integrator (44) zugeführt ist und der Ausgang des Integrators (44) das Eingangssignal des Wobbel-Generators (20) bildet.

10. Elektrostatische Pulverbeschichtungspistole nach Anspruch 9, dadurch **gekennzeichnet,** daß der Ausgang des Integrators über zwei Komparatoren (46 und 48) an den Setzeingang bzw. den Rücksetzeingang des JK-Speichergliedes (42) zurückgeführt ist, wobei am J- und am K-Eingang des Speichergliedes ständig logisch "1" anliegt.

11. Elektrostatische Pulverbeschichtungspistole nach einem der Ansprüche 7 bis 10, dadurch **gekennzeichnet,** daß der Wobbel-Generator (20) einen spannungsgesteuerten Oszillator (VCO) (22) und ein Totzeit-Steuerglied (24) aufweist und daß der Ausgang des Wobbelgenerators mit der Primärspule (14) des Transformators (10) verbunden ist.

## Claims

1. A method of generating a high voltage at low frequency in an electrostatic powder coating gun comprising a high-voltage generator which includes a transformer and a high-voltage cascade arrangement (12) on the output side of the transformer (10), in which the output voltage from the transformer (10) is supplied to the low-voltage input of the high-voltage cascade arrangement (12) and the output voltage from the high-voltage cascade arrangement is supplied to a high-voltage coating electrode and the primary coil (14) of the transformer is fed by an a.c. supply voltage operating at a working frequency and during operation of the coating gun the frequency of the supply voltage is varied around the working frequency, characterized in that
- the frequency of the supply voltage is continuously varied (wobbled),
- the variation of the current intensity of the primary coil current (I) of the transformer (10) is also continuously detected, and
- the direction of frequency variation (sweep direction) is reversed whenever an increase in the current intensity of the primary coil current (I) is detected.

2. The method claimed in claim 1, characterized in that the frequency of the supply voltage is varied within a predetermined limited range.

3. The method claimed in claim 1 or claim 2, characterized in that the frequency of the supply voltage is selected to be within the range of from 15 to 30 kHz, preferentially from 19 to 27 kHz.

4. The method claimed in any of the preceding claims, characterized in that the supply voltage is a rectangular-wave voltage.

5. The method claimed in any of the preceding claims, characterized in that the frequency of the supply voltage is varied by about ± 50 to ± 150 Hz during sweeping.

6. The method claimed in any of the preceding claims, characterized in that the frequency of the supply voltage is varied at a sweep frequency of from 50 to 150 Hz.

7. An electrostatic powder coating gun comprising a high-voltage generator which includes a transformer (10) and a high-voltage cascade arrangement (12) on the output side of the transformer, in which the output voltage from the transformer (10) is supplied to the low-voltage input of the high-voltage cascade arrangement (12) and the output voltage from the high-voltage cascade arrangement is supplied to a high-voltage coating electrode and the primary coil (14) of the transformer is fed by an a.c. supply voltage operating at a working frequency comprising
- a current detection circuit (28) for continually detecting the variation in the current intensity of the primary coil current (I) of the transformer,
- a sweep generator (20) for continually varying (sweeping) the frequency of the supply voltage about the working frequency during operation of the coating gun and
- control means (36, 38, 40) for controlling the operation of the sweep generator, wherein the control means changes the direction of frequency variation (sweep direction) whenever an increase in the current intensity of the primary coil is detected.

8. The electrostatic powder coating gun claimed in claim 7 , characterized in that the current detection circuit comprises a precision resistor (26) connected to the primary coil (14) of the transformer (10), a peak rectifier (30), a differentiator (32) and a delay element (34).

9. The electrostatic powder coating gun claimed in any of the claims 7 to 8, characterized in that the control means (40) comprises an AND gate (36), a JK latching circuit (42) and an integrator (44), one (E2) of the inputs of the AND gate being connected to the output of the current detection circuit, another input (E1) being connected to a clock (38), and the output of the AND gate being connected to the clock input of the latching circuit (42), an output from the JK latching circuit (42) being provided to the integrator (44) and the output from the integrator (44) constituting the input signal to the sweep generator (20).

10. The electrostatic powder coating gun claimed in claim 9, characterized in that the output from the integrator is fed back via two comparators (46 and 48) to the set input or the reset input of the JK latching circuit (42), a logic "1" continuously appearing at the J-input and the K-input of the latching circuit.

11. The electrostatic powder coating gun claimed in any of the claims 7 to 10, characterized in that the sweep generator (20) comprises a voltage-controlled oscillator (VCO) (22) and a lag control element (24) and that the output of the sweep generator is connected to the primary coil (14) of the transformer (10).

## Revendications

1. Procédé de production d'une haute tension à faible fréquence dans un pistolet pour le revêtement électrostatique par poudre, avec un générateur de haute tension, qui présente un transformateur et une cascade à haute tension (12) mise en circuit en aval du transformateur (10), pour lequel la tension de sortie du transformateur (10) est amenée à l'entrée basse tension de la cascade à haute tension (12), et la tension de sortie de la cascade à haute tension est amenée à une électrode de revêtement à haute tension, l'enroulement primaire (14) du transformateur étant alimenté par une tension alternative d'alimentation évoluant à la fréquence de travail et, pendant le fonctionnement du pistolet de revêtement, la fréquence de la tension d'alimentation étant modifiée autour de la fréquence de travail, caractérisé en ce que
- la fréquence de la tension d'alimentation est modifiée (wobbulée) de façon continue, ininterrompue,
- la modification de l'intensité du courant d'enroulement primaire (I) du transformateur (10) étant également déterminée de façon ininterrompue, et
- le sens de la modification de fréquence (sens de wobbulation) est inversé, chaque fois qu'une augmentation de la valeur d'intensité du courant d'enroulement primaire (I) est constatée.

2. Procédé selon la revendication 1, caractérisé en ce que la fréquence de la tension d'alimentation est modifiée dans les limites d'une plage prédéterminée, limitée.

3. Procédé selon la revendication 1 ou 2, caractérisé en ce qu'une fréquence de tension d'alimentation est choisie dans la plage de 15 à 30 kHz, de préférence de 19 à 27 kHz.

4. Procédé selon l'une des revendications précédentes, caractérisé en ce que la tension d'alimentation est une tension à forme rectangulaire.

5. Procédé selon l'une des revendications précédentes, caractérisé en ce que la fréquence de la tension d'alimentation, lors de la wobbulation, varie d'environ ±50 à ±150 Hz.

6. Procédé selon l'une des revendications précédentes, caractérisé en ce que la fréquence de la tension d'alimentation est modifiée avec une fréquence du wobbulateur de 50 à 150 Hz.

7. Pistolet de revêtement électrostatique par poudre, avec un générateur haute tension, présentant un transformateur (10) et une cascade haute tension (12) mise en circuit en aval du transformateur, dans lequel la tension de sortie du transformateur (10) est amenée à l'entrée basse tension de la cascade à haute tension (12) et la tension de sortie de la cascade à haute est amenée à une électrode à haute tension de revêtement, et l'enroulement primaire (14) du transformateur étant alimenté par une tension alternative d'alimentation évoluant à une fréquence de travail, avec
- un circuit de mesure de courant (28) destiné à appréhender de façon continue la modification de l'intensité du courant d'enroulement primaire (I) du transformateur,
- un wobbulateur (20) destiné à modifier de façon continue et ininterrompue la fréquence de la tension d'alimentation, autour de la fréquence de travail (wobbulation) pendant le fonctionnement du pistolet de revêtement, et
- un dispositif de commande (36, 38, 40), conçu pour commander le fonctionnement du générateur de wobbulation,
- le dispositif de commande procédant à une inversion du sens de la variation de fréquence (sens de wobbulation) chaque fois que peut être constatée une augmentation de l'intensité électrique du courant d'enroulement primaire.

8. Pistolet de revêtement électrostatique par poudre selon la revendication 7, caractérisé en ce que le circuit de mesure de courant présente une résistance de mesure de courant (26) reliée à l'enroulement primaire (14) du transformateur (10), un redresseur de valeur de crête (30), un différenciateur (32) et un organe retardateur (34).

9. Pistolet de revêtement électrostatique par poudre selon l'une des revendications 7 à 8, caractérisé en ce que le dispositif de commande (40) présente une organe logique ET (36), un organe mémoire à bascule JK (42) et un intégrateur (44), une entrée (E2) de l'organe logique ET étant reliée à la sortie du circuit de mesure de courant, une autre entrée (E1) étant reliée à un cadenceur (38) et la sortie de l'organe logique ET étant reliée à l'entrée de cadencement de l'organe mémoire (42), une sortie de l'organe mémoire à bascule JK (42) étant amenée à l'intégrateur (44) et la sortie de l'intégrateur (44) constituant le signal d'entrée du wobbulateur (20).

10. Pistolet de revêtement électrostatique par poudre selon la revendication 9, caractérisé en ce que la sortie de l'intégrateur est ramenée, par l'intermédiaire de deux comparateurs (46 et 48), à l'entrée de fixation, respectivement à l'entrée de refixation, de l'organe mémoire à bascule JK (42), un "1" logique étant appliqué en permanence à l'entrée J et à l'entrée K de l'organe mémoire.

11. Pistolet de revêtement électrostatique par poudre selon une des revendications 7 à 10, caractérisé en ce que le générateur de wobbulation (20) présente un oscillateur (VCO) (22), commandé par tension, et un organe de commande de temps mort (24), et en ce que la sortie du wobbulateur est reliée à l'enroulement primaire (14) du transformateur (10).
